Europäisches Patentamt

European Patent Office

Office européen des brevets

(11) Publication number: **0 678 552 A1**

# EUROPEAN PATENT APPLICATION

(21) Application number: **94302851.4**

(22) Date of filing: **21.04.94**

(51) Int. Cl.6: **C08K 5/42**, C08L 67/02, C08G 63/183

(43) Date of publication of application:
**25.10.95 Bulletin 95/43**

(84) Designated Contracting States:
**DE FR GB**

(71) Applicant: **POLYPLASTICS CO. LTD.**
**3-13, Azuchicho, 2-chome**
**Chuo-Ku**
**Osaka-shi**
**Osaka 541 (JP)**

(72) Inventor: **Kawaguchi, Kuniaki**
**4-2, Higashimakado 2-chome**
**Numazu-shi,**
**Shizuoka (JP)**
Inventor: **Nakane, Toshio**
**885-11, Miyajima**
**Fuji-shi,**
**Shizuoka (JP)**
Inventor: **Hijikata, Kenji**
**8-8, Fujimidai**
**Mishima-shi,**
**Shizuoka (JP)**

(74) Representative: **Jackson, Peter**
**HYDE, HEIDE & O'DONNELL**
**10-12 Priests Bridge**
**London SW15 5JE (GB)**

(54) Process for the preparation of modified polybutylene terephthalate resin.

(57) The present invention provides a process for the preparation of a polyester from an acid component comprising terephthalic acid or a lower alcohol ester thereof as a main component and a diol component comprising 1,4-butanediol as a main component, wherein 0.001 to 0.5 mol % (based on the acid component) of a specific aromatic sulfonic acid compound is dissolved in the diol component or a mixture of the diol component with the acid component and thereafter a catalyst is added to the resulting reaction system to conduct esterification (or transesterification) and polycondensation successively, for the purpose of providing a modified polybutylene terephthalate resin which little generates gas such as tetrahydrofuran even in high-temperature service and little gives sublimate in melting.

Rank Xerox (UK) Business Services
(3.10/3.09/3.3.4)

This invention relates to a process for the preparation of a stable modified polybutylene terephthalate resin which generates little or no gas (such as tetrahydrofuran) even in high-temperature service and gives little or no sublimate in melt-processing. The invention also relates to a molded article made from a modified polybutylene terephthalate resin prepared by this process or a composition containing the resin.

Polybutylene terephthalate (hereinafter sometimes referred to simply as PBT) has been widely applied to various uses including automobiles and electric and electronic equipment as an engineering plastic, since it has excellent mechanical, electrical, chemical and physical properties as a crystalline thermoplastic resin. Further, PBT has excellent properties of odour retention and as a gas barrier (for example to steam), which makes it highly useful in the field of packaging as, for example, packaging films or containers for food and cosmetics.

However PBT has a disadvantage in mold processing. Namely, when heated in a molten state, it decomposes to generate gas and give a sublimate, which causes the formation of voids in molded articles or adhesion to molding devices such as mold and roll to thereby induce contamination or corrosion. In a practical production process, molding of a resin is often conducted not continuously but intermittently, In such a case, the prolonged residence of the molten resin in a molding machine brings about serious problems of the generation of gas and sublimate.

In addition, molded articles made from the PBT resin generate gas such as tetrahydrofuran in high-temperature service, which causes additional problems. In the case of an electric or electronic part such as a relay, switch or connector, the metal contact is contaminated or corroded thereby. In the case of a container for food, drink or cosmetic or a packaging film, an offensive odour permeates into the contents or the taste of the contents is adversely affected.

Therefore it has been urgently required to reduce the gas generated from molded articles.

Under these requirements, the present inventors have conducted extensive studies in order to give a modified polybutylene terephthalate resin which sustains the excellent physicochemical properties of PBT resins but generates little or no gas such as tetrahydrofuran particularly in high-temperature service and gives little or no sublimate in melting, thus completing the present invention.

Accordingly, the present invention provides a process for the preparation of a modified polybutylene terephthalate resin by reacting an acid component comprising terephthalic acid or a lower alcohol ester thereof as a main component with a diol component comprising 1,4-butanediol as a main component, characterized by dissolving 0.001 to 0.5 mol % (based on the acid component) of at least one compound represented by the following general formula (I) in the diol component or a mixture of the diol component with the acid component and thereafter adding a catalyst to the resulting reaction system to conduct esterification (or transesterification) and polycondensation successively:

$$Ar - (SO_3M)_n \quad (I)$$

wherein Ar represents either an unsubstituted benzene or naphthalene ring, or a benzene or naphthalene ring substituted by an alkyl group having 1 to 30 carbon atoms, an alkenyl group having 2 to 30 carbon atoms or an alkynyl group; n is 1 or 2; and M is a group or element selected from among tetraalkylphosphonium and tetraalkylammonium groups, lithium, sodium, potassium, barium and calcium.

The invention also provides a molded article made from a modified PBT resin prepared by the said process or a composition containing the resin.

The modified polybutylene terephthalate according to the present invention is one having butylene terephthalate units, prepared from an acid component comprising terephthalic acid or a lower alcohol ester thereof as a main component and a diol component comprising 1,4-butanediol as a main component, as a main constituent and involves both of homopolyesters and copolyesters.

To prepare a copolyester, one or more known bifunctional carboxylic acids or lower alcohol esters thereof (for example, 2,6-naphthalenedicarboxylic acid, 2,7-naphthalenedicarboxylic acid, diphenic acid, adipic acid, sebacic acid, dodecanedicarboxylic acid, 1,4-cyclohexane-dicarboxylic acid or dimethyl esters thereof) can be used as an acid component comonomer in addition to the main acid component as described above. Also, one or more known bifunctional diols [for example, ethylene glycol, diethylene glycol, triethylene glycol, 1,3-propanediol, neopentyl glycol, 1,6-hexanediol, 1,10-decanediol, 1,4-cyclohexanediol, p-xylydene glycol, alkylene oxide adducts of hydroquinone, alkylene oxide adducts of 2,2-bis(4-hydroxyphenyl)propane, alkylene oxide adducts of bis(4-hydroxyphenyl) sulfone and alkylene oxide adducts of 2,6-dihydroxynaphthalene] can be used as a diol component comonomer in addition to the main diol component as described above. Further, halogen-substituted derivatives of these materials may be used as a comonomer so as to impart flame retardancy to the resin. Furthermore, polyfunctional (trifunctional or above) compounds such as trimethyl trimesate, trimethyl trimellitate, trimethylolpropane and pentaerythritol, monofunctional compounds such as stearyl alcohol, methyl o-benzoylbenzoate and epoxy compounds, hydroxycarboxylic acid derivatives such as methyl p-hydroxyethoxybenzenecarboxylate, or polyalkylene glycols such as polypropylene glycol and polytetrahydrofuran may be used in a small amount or together with the above-mentioned comonomers. These copolymers are introduced preferably in an amount of 30 mol % or less, more preferably 20 mol % or less, based on all the repeating ester units.

The process for the preparation of a modified polybutylene terephthalate resin of the present invention is characterized by preliminarily dissolving 0.001 to 0.5 mol % (based on the acid component) of at least one compound represented by the following general formula (I) in the diol component or a mixture of the diol component with the acid component.

$$Ar - (SO_3M)_n \quad (I)$$

wherein Ar represents either an unsubstituted benzene or naphthalene ring, or a benzene or naphthalene ring substituted by an alkyl group having 1 to 30 carbon atoms, an alkenyl group having 2 to 30 carbon atoms or an alkynyl group; n is 1 or 2; and M is a group or element selected from among tetraalkylphosphonium and tetraalkylammonium groups, lithium, sodium, potassium, barium and calcium.

Particular examples of the compound represented by the above general formula (I) include tetrabutylphosphonium benzenesulfonate, tetrabutylphosphonium 4-dodecylbenzenesulfonate, tetrabutylphosphonium 4-methylbenzenesulfonate, tetrabutylphosphonium 4-vinylbenzenesulfonate, tetrabutylammonium benzenesulfonate, tetrabutylammonium 4-dodecylbenzenesulfonate, tetrabutylammonium 4-methylbenzenesulfonate, tetrabutylammonium 4-vinylbenzenesulfonate, sodium benzenesulfonate, sodium 4-dodecylbenzenesulfonate, sodium 4-methylbenzenesulfonate, sodium 4-vinylbenzenesulfonate, potassium 4-dodecylbenzenesulfonate, calcium 4-dodecylbenzenesulfonate, tetrabutylphosphonium 3,5-dimethylbenzenesulfonate and tetrabutylphosphonium 1-alkylnaphthalene-7-sulfonate.

It is necessary that such an aromatic sulfonic acid compound represented by the general formula (1) be preliminarily dissolved in the monomers at an arbitrary point from the step of the preparation of the monomers to the initiation of the esterification or transesterification. More specifically, the compound represented by the above general formula (1) is first dissolved in the diol component mainly comprising 1,4-butanediol or a mixture of the diol component with the acid component mainly comprising terephthalic acid or a lower alcohol ester thereof and then an esterification or transesterification catalyst is added thereto. Alternatively, the catalyst may be mixed with part of the monomer components and then added. The aromatic sulfonic acid compound represented by the general formula (1) and the catalyst may be added in several portions in arbitrary steps, so long as the above-mentioned requirements are satisfied. It is not desirable that the esterification or transesterification catalyst is added before the dissolution of the compound represented by the above general formula (I) in the diol component mainly comprising 1,4-butanediol or a mixture of the diol component with the acid component mainly comprising terephthalic acid or a lower alcohol ester thereof. This is because the solubility of the compound represented by the general formula (1) is lowered in this case and thus the compound remains in the polymer or molded articles made therefrom as small particles of foreign matter, which adversely affests the appearance and physicochemical properties thereof. Furthermore, the effects of reducing gas and sublimate generated from the resin, which are to be achieved by the present invention, are adversely affected.

The aromatic sulfonic acid compounds as described above may be added either singly or combinedly preferably in a proportion of from 0.001 to 0.5 mol %, more preferably from 0.01 to 0.3 mol %, based on the acid component monomer. If the amount of the compound of the general formula (I) dissolved in the monomer is smaller than 0.001 mol %, only poor effects of reducing gas such as tetrahydrofuran generated from a molded article in high-temperature service and reducing sublimate generated therefrom in melting can be achieved. If the amount of the compound of the general formula (I) exceeds 0.5 mol %, on the other hand, the above-mentioned effects reach equilibrium and the undissolved compound remains in the polymer as small particles of foreign matter, which brings about undesirable phenomena such as deterioration of the appearance of a molded article or decrease in the mechanical strength of the same.

When a lower alcohol ester of terephthalic acid is to be used as the acid component in the process of the present invention, the transesterification is effected by using the lower alcohol ester of terephthalic acid and 1,4-butanediol at a molar ratio of from 1 : 1 to 1 : 2 under atmospheric pressure. To achieve a practically useful reaction rate, a catalyst is added after the dissolution of the above-mentioned aromatic sulfonic acid compound. As examples of the catalysts, titanium compounds, tin compounds, lead oxide, lead acetate, zinc acetate, zinc oxide and manganese acetate may be cited. Among these compounds, organic titanate compounds, titanium tetrachloride compounds, hydrolyzates or alcoholyzates thereof, tin oxide, tin acetate and organotin compounds are particularly suitable therefor. Particular examples of the catalyst include titanium compounds which have been known as a catalyst for the preparation of polyesters such as tetrabutyl titanate, tetrapropyl titanate, tetraethyl titanate and tetramethyl titanate and hydrolyzates thereof, hydrolyzates of titanium tetrachloride and titanium sulfate, inorganic titanium compounds such as titanium potassium fluoride, titanium zinc fluoride and titanium cobalt fluoride, titanium oxalate and titanium potassium oxalate, and/or tin compounds which have been known as a catalyst for the preparation of polyesters such as dibutyltin oxide, dibutyltin acetate, dioctyltin diacetate, diphenyltin dilaurylmercaptide, polydibutyltin sebacate, dibutyltin ethylene glycolate, dioctyltin thiosalicylate, diphenyltin benzenesulfonate and dimethyltin p-toluenesulfonate. As particularly preferable examples thereof, tetrabutyl titanate, tetrapropyl titanate, hydrolyzate of titanium tetrachloride, dibutyltin oxide, dibutyltin acetate and dioctyltin diacetate may be cited.

When these titanium compounds, tin compounds or mixtures thereof are to be used as a catalyst, the catalyst is used preferably in a proportion of from 10 to 1200 ppm (based on the polymer), more preferably from 30 to 1000 ppm (based on the polymer), in terms of titanium or tin (or the sum in the case of a mixture). It is preferable that the catalyst be added at a temperature of the reaction mixture of 170°C or below. The catalyst may be added in several portions during the reaction, if necessary. Subsequently, the reaction temperature can be elevated up to 230°C while continuously eliminating lower alcohols, such as methanol, thus formed. It is not preferable to add the catalyst at a reaction system temperature higher than 170°C, since the lower alcohols such as methanol are formed at a higher distillation rate in this case and thus remarkable bumping toward the upper part of a distillation tube occurs, which causes some disorders such as the blocking of the equipment.

The esterification with the use of an acid component comprising terephthalic acid as a main component is effected by using from 1 to 5 mol of 1,4-butanediol per mol of terephthalic acid under atmospheric or elevated pressure. After the dissolution of the above-mentioned aromatic sulfonic acid compound, an esterification catalyst (for example, a titanium compound or a tin compound as cited above) is added and the esterification is carried out while continuously eliminating water thus formed. In this case, it is also preferable to add the catalyst at a temperature of the reaction system of 170°C or below. The catalyst may be added in several portions during the reaction, if necessary. Subsequently, the reaction temperature can be elevated up to 250°C.

To effect the polycondensation, the product obtained by the above-mentioned esterification or transesterification is subjected to melt polymerization at a temperature of 190 to 270°C under reduced pressure until the desired degree of polymerization is achieved, while continuously eliminating the excessive 1,4-butanediol and the by-products from the reaction system. As a catalyst for achieving a practically useful reaction rate in this polycondensation, those which are to be used in the above transesterification or esterification are usable as such. In order to elevate the polycondensation rate, one or more of these catalysts can be added prior to the initiation of the polycondensation. Further, known stabilizers such as a sterically hindered phenol or a phosphorus compound can be added in the step of preparation of the monomers or in the step of polymerization. The aromatic sulfonic acid compound, when added in an amount as specified in the present invention, neither exerts any undesirable effects on the polycondensation rate nor inhibits the polycondensation.

The modified polybutylene terephthalate of the present invention obtained by the melt polymerization has an intrinsic viscosity of about 0.5 to 1.2 in o-chlorophenol at 25°C. Next, it is solidified by cooling and ground or pelletized. When a high degree of polymerization is to be achieved, it can be further subjected to solid phase polymerization depending on the purpose. The solid phase polymerization is effected by a known method and the degree of polymerization can be adjusted to any desired level by appropriately controlling, for example, residence time and treating temperature.

If required, the modified polybutylene terephthalate resin of the present invention may be used as a composition prepared by adding one or more auxiliary components such as other thermoplastic resins, additives, organic fillers and inorganic fillers thereto during or after the polymerization. As examples of the thermoplastic resins to be used herein, polyester elastomers, polyester resins other than the one of the present invention, polyolefin resins, polystyrene resins, polyamide resins, polycarbonate, polyacetal, polyarylene oxide, polyarylene sulfide and fluororesins may be cited. As examples of the additives, known ones including stabilizers such as UV absorbers and antioxidants, antistatic agents, flame retardants, flame retardant aids, colorants such as dyes and pigments, lubricants, plasticizers, mold-releasing agents and nucleating agents may be cited. As examples of the inorganic fillers, glass fiber, milled glass fiber, glass beads, glass flakes, silica, alumina fiber, zirconia fiber, potassium titanate fiber, carbon fiber, carbon black, graphite, silicates such as calcium silicate, aluminium silicate, kaolin, talc and clay, metal oxides such as iron oxide, titanium oxide, zinc oxide, antimony oxide and alumina, carbonates and sulfates of metals such as calcium, magnesium and zinc, silicon carbide, silicon nitride and boron nitride may be cited. As examples of the organic fillers, high-melting aromatic polyester fibers, liquid-crystalline polyester fibers, aromatic polyamide fibers, fluororesin fibers and polyimide fibers may be cited.

When a resin is to be used as molded articles such as electric and electronic parts or automotive parts, flame retardancy is frequently needed due to the service environment. In such a case, it is frequently required to add a flame retardant or a flame retardant aid to the resin as an essential component. As the flame retardant, known halogen-containing compounds such as brominated polycarbonate, brominated epoxy compounds, brominated diphenyl and brominated diphenyl ether can be used. As the flame retardant aid, antimony compounds such as antimony trioxide, antinomy pentoxide and antimony halides and metal compounds containing zinc or bismuth and clay silicates such as asbestos can be used. Further, it is preferable to use stabilizers such as an antioxidant in a suitable amount, since the effects of the present invention can be improved thereby.

The modified PBT resin according to the present invention or its composition is applicable to various molding methods, for example, injection molding, extrusion molding, blow molding, compression molding and vacuum molding. It can be processed into various molded articles, films and sheets and employed for various purposes.

The modified polybutylene terephthalate resin prepared in accordance with the present invention has good physicochemical properties, is particularly excellent in stability in melt-molding, gives little decomposition sublimate and little generated gas such as tetrahydrofuran in high-temperature service. It can be suitably applied to electrical and electronic parts such as relays, switches and connectors without causing corrosion or contamination at a metal contact. Also it can be suitably applied to containers for food and cosmetics and packaging films without contaminating the contents.

Examples

To illustrate the present invention in greater detail, and not by way of limitation, the following Examples will be given.

The properties of resin products were evaluated by the following methods.

(1) Generated gas and measurement of the amount of the gas

A tensile test piece of ASTM No. 1 was prepared under definite conditions by using an injection molding machine and ground in such a manner as to give a definite particle size to thereby give a sample. 5 g of the sample was allowed to stand in a head space (20 ml) at 140°C for 2 hours. Then the amount of the gas thus generated was measured by gas chromatography under the conditions as specified below. Based on the weight of the sample, the amount of the gas thus generated was expressed in ppm.

Device: Yokogawa-Hewlett-Packard HP5890A.
Column: HR-1701,
0.32 mm (diameter) x 30 m.
Column temp.: 50°C (1 min)' -> 5°C/min ->
250°C (1 min).
Detector: FID.

(2) Measurement of melt-heating loss

In a thermogravimetry device (Perkin-Elmer, TGA-7), 10 mg of the sample cut from a pellet was melt-heated in a nitrogen flow atmosphere at 260°C. Then the weight loss for a period of 10 minutes (from 5 to 15 minutes after the initiation of the melt-heating) was determined.

(3) Evaluation of mechanical strength

The Izod impact strength (on the notched side) was measured in accordance with ASTM D 256.

Examples 1 to 3 and Comparative Examples I and 2

A reaction vessel equipped with a stirrer and a distillation column was thoroughly purged with nitrogen. A definite amount of tetrabutylphosphonium benzenesulfonate (I-a) was preliminarily added and dissolved in 145 parts by weight of 1,4-butanediol (1,4 BD) at 1400C. Next, 246 parts by weight of dimethyl terephthalate (DMT) and 0.16 part by weight of titanium tetrabutoxide were added thereto and transesterification was effected. The reaction temperature was gradually elevated while distilling off the methanol formed as a by-product. When the amount of the distilled methanol exceeded 88 % by weight of the theoretical amount, the temperature of the reaction mixture was elevated to 200°C. Then it was transferred into another reaction vessel. The pressure was reduced to 0.5 Torr within 1 hour while the reaction temperature was elevated to 250°C at the same time. After stirring the reaction mixture under these conditions for 1.5 hours, the molten matter was extruded as strands via a discharge port. These strands were cooled with water and passed through a hot air stream to eliminate water adhering thereto. Thus a modified PBT resin in the form of pellets was obtained.

The intrinsic viscosity of the polyester thus obtained was measured in o-chlorophenol at 25°C and the above-mentioned properties thereof were further evaluated. It was shown that the gas generated from the resin comprised 1-butene, tetrahydrofuran, 3-butene-1-ol, etc. Table 1 shows the results. For comparison, a sample comprising no aromatic sulfonic acid compound (Comparative Example 1) and another sample comprising I-a in an amount outside the range specified in the present invention were similarly evaluated. These results are also given in Table 1. Small white particles were observed in the polyester obtained in Comparative Example 2.

Examples 4 to 6 and Comparative Examples 3 and 4

Modified PBT resins were obtained by effecting melt polymerization in the same manner as described in Example 2, except that the tetrabutylphosphonium benzenesulfonate (I-a) was replaced by tetrabutylphosphonium 4-dodecylbenzenesulfonate (I-b), tetrabutylammonium 4-methylbenzenesulfonate (I-c) and sodium 4-vinylbenzenesulfonate (I-d) each in a definite amount (0.1 mol % based on DMT). Table 2 shows the results. For comparison, samples prepared by using 3,5-dicarboxybenzenesulfonic acid (I'-e) and sodium 4-hydroxybenzenesulfonate (I'-f), which are different in structure from the compound represented by the general formula (I), were similarly evaluated. The results are also given in Table 2.

Example 7

To a solution of a mixture of 145 parts by weight of 1,4 BD with 246 parts by weight of DMT at 140°C was dissolved 0.56 part by weight (0.1 mol % based on DMT) of tetrabutylphosphonium benzenesulfonate (I-a).

Next, 0.16 parts by weight of titanium tetrabutoxide was added thereto at the same temperature and transesterification was effected under atmospheric pressure. The temperature was gradually elevated and methanol thus formed as a by-product was distilled off. When the temperature of the reaction mixture reached 200°C, the mixture was transferred into another reaction vessel. The pressure was reduced and, at the same time, the reaction temperature was elevated to 250°C to thereby give a modified PBT resin. The polyester thus obtained was evaluated by the same methods as those employed in Example 2. Table 3 shows the results.

Comparative Example 5

To 145 parts by weight of 1,4 BD and 246 parts by weight of DMT was first added 0.16 parts by weight of titanium tetrabutoxide and the temperature was elevated. When the temperature in the system reached 140°C, 0.56 part by weight (0.1 mol %) of tetrabutylphosphonium benzenesulfonate (I-a) was added. The reaction temperature was gradually elevated and methanol formed as a by-product was distilled off. When the temperature of the reaction mixture reached 200°C, the mixture was transferred into another reaction vessel. The pressure was reduced and, at the same time, the reaction temperature was elevated to 250°C to thereby give a PBT resin. The polyester thus obtained was evaluated by the same methods as those described in Example 2. Table 3 shows the results. In the polyester thus formed, small white particles were observed. Further, a molded article made therefrom showed poor surface conditions.

Examples 8 and 9 and Comparative Examples 6 and 7

Copolyesters were obtained by effecting melt polymerization in the same manner as the one described in Example 2, except that a part (10 mol %) of the DMT was replaced by dimethyl isophthalate (DMI) (Example 8), or a part (2.5 mol %) of the 1,4 BD was replaced by 2,2-bis[3,5-dibromo-4-(2-hydroxyethoxy)-phenyl]propane (BrEPA) (Example 9). Table 4 shows the results. For comparison, samples free from any aromatic sulfonic acid compound (Comparative Examples 6 and 7) were evaluated in the same manner. The results are also given in Table 4.

Table 1

| | Arom. sulfonic acid compd. | | Intrinsic viscosity (dl/g) | Gas generation (ppm) | | | | Melt-heating loss (%) | Izod impact strength (kgf·cm/cm) |
| --- | --- | --- | --- | --- | --- | --- | --- | --- | --- |
| | type | amt. (mole% based on DMT) | | 1-butene | tetrahydro-furan | 3-buten-1-ol | in total | | |
| Comp.Ex. 1 | - | - | 0.77 | 0.09 | 192.03 | 0.81 | 194.18 | 0.097 | 2.7 |
| Ex. 1 | I-a | 0.05 | 0.77 | 0.05 | 49.97 | 0.71 | 51.45 | 0.070 | 2.8 |
| Ex. 2 | I-a | 0.1 | 0.78 | 0.05 | 41.03 | 0.70 | 43.22 | 0.068 | 2.7 |
| Ex. 3 | I-a | 0.3 | 0.77 | 0.06 | 40.14 | 0.70 | 41.57 | 0.066 | 2.8 |
| Comp.Ex. 2* | I-a | 0.8 | 0.77 | 0.07 | 43.02 | 0.70 | 45.09 | 0.067 | 2.1 |

*: White foreign matters were observed.

7

Table 2

| | Arom. sulfonic acid compd. | | Intrinsic viscosity | Gas generation (ppm) | | | | Melt-heating loss | Izod impact strength (kgf•cm/cm) |
|---|---|---|---|---|---|---|---|---|---|
| | type | amt. (mole% based on DMT) | (dl/g) | 1-butene | tetrahydro-furan | 3-buten-1-ol | in total | (%) | |
| Ex. 2 | I-a | 0.1 | 0.77 | 0.05 | 41.03 | 0.70 | 43.22 | 0.068 | 2.7 |
| Ex. 4 | I-b | 0.1 | 0.78 | 0.06 | 38.06 | 0.69 | 40.49 | 0.067 | 2.8 |
| Ex. 5 | I-c | 0.1 | 0.78 | 0.05 | 37.22 | 0.69 | 39.11 | 0.067 | 2.7 |
| Ex. 6 | I-d | 0.1 | 0.77 | 0.06 | 40.39 | 0.71 | 42.07 | 0.068 | 2.8 |
| Comp. Ex. 3 | I'-e | 0.1 | 0.79 | 0.09 | 196.10 | 0.82 | 198.30 | 0.098 | 2.2 |
| Comp. Ex. 4 | I'-f | 0.1 | 0.76 | 0.11 | 230.59 | 0.83 | 241.64 | 0.112 | 2.6 |

Table 3

| | Arom. sulfonic acid compd. | | Intrinsic viscosity | Gas generation (ppm) | | | | Melt-heating loss | Izod impact strength (kgf·cm/cm) |
|---|---|---|---|---|---|---|---|---|---|
| | type | amt. (mole% based on DMT) | (dl/g) | 1-butene | tetrahydro-furan | 3-buten-1-ol | in total | (%) | |
| Ex. 2 | I-a | 0.1 | 0.77 | 0.05 | 41.03 | 0.70 | 43.22 | 0.068 | 2.7 |
| Ex. 7 | I-a | 0.1 | 0.77 | 0.05 | 41.29 | 0.71 | 43.18 | 0.068 | 2.7 |
| Comp. Ex. 5 | I-a | 0.1 | 0.77 | 0.06 | 118.98 | 0.75 | 121.33 | 0.090 | 1.9 |

*: White foreign matters were observed.

EP 0 678 552 A1

Table 4

| | Comonomer | | Arom. sulfonic acid compd. | | Intrinsic viscosity (dl/g) | Gas generation (ppm) | | | | Melt-heating loss (%) |
|---|---|---|---|---|---|---|---|---|---|---|
| | type | amt. (mole%) | type | amt. (mole% based on DMT) | | 1-butene | tetrahydro-furan | 3-buten-1-ol | in total | |
| Ex. 8 | DMI*1 | 10 | I-a | 0.1 | 0.75 | 0.11 | 45.33 | 0.82 | 48.01 | 0.069 |
| Comp. Ex. 6 | DMl | 10 | - | - | 0.75 | 0.12 | 205.41 | 0.91 | 208.43 | 0.101 |
| Ex. 9 | BrEBPA*2 | 2.5 | I-a | 0.1 | 0.73 | 0.13 | 48.52 | 0.83 | 62.19 | 0.070 |
| Comp. Ex. 7 | BrEBPA | 2.5 | - | - | 0.73 | 0.15 | 222.72 | 0.91 | 264.33 | 0.119 |

*1: dimethyl isophthalate.

*2: 2,2-bis[3,5-dibromo-4-(2-hydroxyethoxy)phenyl]propane.

## Claims

1. A process for the preparation of a modified polybutylene terephthalate resin by reacting an acid component comprising terephthalic acid or a lower alcohol ester thereof as a main component with a diol component comprising 1,4-butanediol as a main component, characterized by dissolving 0.001 to 0.5 mol % (based on the acid component) of at least one compound represented by the following general formula (I) in the diol component or a mixture of the diol component with the acid component and thereafter adding a catalyst to the resulting reaction system to conduct esterification (or transesterification) and polycondensation successively:

$$Ar - (SO_3M)_n \quad (I)$$

wherein Ar represents either an unsubstituted benzene or naphthalene ring, or a benzene or naphthalene ring substituted by an alkyl group having 1 to 30 carbon atoms, an alkenyl group having 2 to 30 carbon atoms or an alkynyl group; n is 1 or 2; and M is a group or element selected from among tetraalkylphosphonium and tetraalkylammonium groups, lithium, sodium, potassium, barium and calcium.

2. A process for the preparation of a modified polybutylene terephthalate resin by reacting an acid component comprising terephthalic acid or a lower alcohol ester thereof as a main component with a diol component comprising 1,4-butanediol as a main component, characterized by dissolving in the diol component or in a mixture of the diol component with the acid component 0.001 to 0.5 mole % (based on the acid component) of at least one aromatic sulfonic acid compound represented by the following general formula (I):

$$Ar - (SO_3M)_n \quad (I)$$

wherein Ar represents either an unsubstituted benzene or naphthalene ring, or a benzene or naphthalene ring substituted by an alkyl group having 1 to 30 carbon atoms, an alkenyl group having 2 to 30 carbon atoms or an alkynyl group; n is 1 or 2; and M is a group or element selected from among tetraalkylphosphonium and tetraalkylammonium groups, lithium, sodium, potassium, barium and calcium,
and thereafter adding a catalyst to the resulting reaction system to conduct successively esterification (or transesterification) and polycondensation.

3. A process as claimed in claim 1 or claim 2, wherein the dissolved quantity of the aromatic sulfonic acid compound (I) is 0.01 to 0.3 mol % (based on the acid component).

4. A process as claimed in any preceding claim, wherein the the transesterification is effected by using a lower alcohol ester of terephthalic acid and 1,4-butanediol at a molar ratio of from 1 : 1 to 1 : 2 under atmospheric pressure.

5. A process as claimed in any preceding claim, wherein the catalyst is selected from tetrabutyl titanate, tetrapropyl titanate, hydrolyzate of titanium tetrachloride, dibutyltin oxide, dibutyltin acetate and dioctyltin diacetate.

6. A process as claimed in any preceding claim, wherein the catalyst is used in a proportion of from 10 to 1200 ppm (based on the polymer).

7. A process as claimed in any preceding claim, wherein the catalyst is added at a temperature of the reaction mixture of 170 °C or below.

8. A molded article made from a modified polybutylene terephthalate resin prepared by the process as set forth in any of claims 1-7.

9. A composition containing a modified polybutylene terephthalate resin prepared by the process as set forth in any of claims 1-7.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Week 9340,<br>Derwent Publications Ltd., London, GB;<br>AN 93-317566<br>& JP-A-5 230 201 (DAINIPPON INK & CHEM KK)<br>7 September 1993<br>* abstract * | 1-9 | C08K5/42<br>C08L67/02<br>C08G63/183 |
| A | GB-A-2 091 273 (ASAHI KASEI KOGYO KABUSHIKI KAISHA)<br>* claims 1-13 * | 1-9 | |
| A | EP-A-0 578 464 (POLYPLASTICS CO. LTD.)<br>* claims 1-4 * | 1 | |
| A | EP-A-0 185 555 (POLYPLASTICS CO. LTD.)<br>* claims 1,5 * | 1 | |
| A | PATENT ABSTRACTS OF JAPAN<br>vol. 018, no. 032 (C-1154)18 January 1994<br>& JP-A-05 262 861 (TORAY IND INC) 12 October 1993<br>* abstract * | | TECHNICAL FIELDS SEARCHED (Int.Cl.6)<br><br>C08K<br>C08G |

The present search report has been drawn up for all claims

| Place of search | Date of completion of the search | Examiner |
|---|---|---|
| THE HAGUE | 20 September 1994 | Decocker, L |